# EUROPÄISCHE PATENTSCHRIFT

(11) **EP 2 054 785 B1**
(45) Veröffentlichungstag und Bekanntmachung des Hinweises auf die Patenterteilung: **26.03.2014**
(21) Anmeldenummer: 07786592.1
(22) Anmeldetag: 07.08.2007
(51) Int. Cl.: G05D 23/24, B05C 5/02

(54) **HEISSLEIMAUFTRAGSSYSTEM UND VERFAHREN ZUR REGELUNG UND ÜBERWACHUNG DES HEISSLEIMAUFTRAGSSYSTEMS**
HOT-GLUE APPLICATION SYSTEM AND METHOD FOR CONTROLLING AND MONITORING THE HOT-GLUE APPLICATION SYSTEM
SYSTÈME D'APPLICATION DE COLLE À CHAUD ET PROCÉDÉ DE RÉGULATION ET DE SURVEILLANCE DU SYSTÈME D'APPLICATION DE COLLE À CHAUD

(30) Priorität: 25.08.2006 DE 102006039839
(43) Veröffentlichungstag der Anmeldung: 06.05.2009
(73) Patentinhaber: Baumer hhs GmbH, 47829 Krefeld (DE)
(72) Erfinder: BALDAUF, Dieter, 40885 Ratingen (DE); SCHNEIDER, Swen, 47589 Uedem (DE)
(74) Vertreter: Kluin, Jörg-Eden
(86) Internationale Anmeldenummer: PCT/EP2007/006956
(87) Internationale Veröffentlichungsnummer: WO 2008/022708

(56) Entgegenhaltungen:
- EP-A- 0 393 354
- WO-A-01/51217
- US-A- 5 604 681
- US-A- 5 700 322
- US-B1- 6 347 723

## Beschreibung

Die Erfindung betrifft ein Heißleimauftragssystem und ein Verfahren zur Regelung und Überwachung des Heißleimauftragssystems.

### Beschreibung

Heißleim, auch bekannt als Schmelzklebstoff oder Hotmelt, wird in der Industrie in den verschiedenartigsten Anwendungen eingesetzt, um Materialien oder Produkte miteinander zu verkleben.

Aus der US 5,700,322 ist ein Heißleimauftragssystem mit beheizten Förderschläuchen und Auftragsventilen sowie einem Temperaturregler bekannt.

Die US 5,604,681 betrifft ein System zur Herstellung von Gemischen von Flüssigkeiten, die über Förderschläuche einen Mischer zugeführt werden. Mittels verschiedener lesbarer Datenträger wird ermittelt, welche der Förderschläuche mit einem Mischer verbunden sind. An Flüssigkeitsquellen vorgesehene Absperrventile werden entsprechend angesteuert.

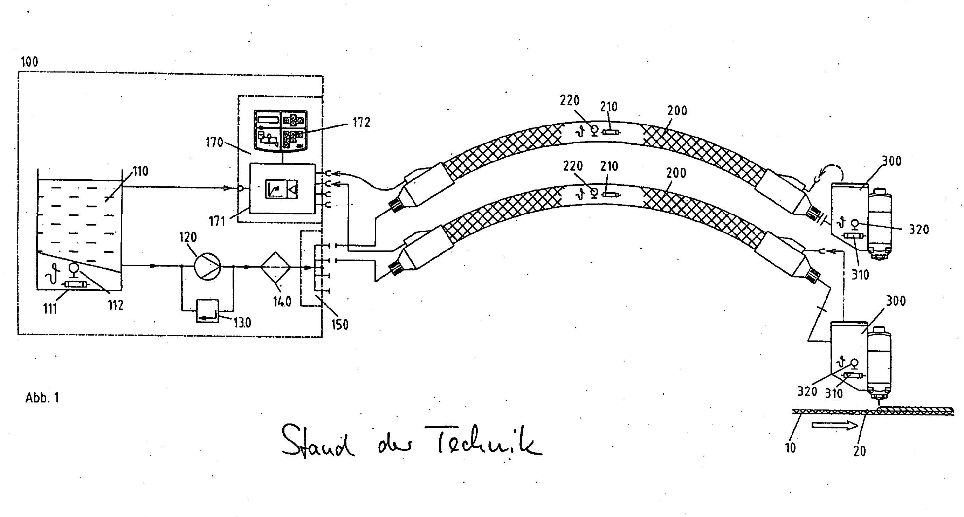

Ein zum Stand der Technik gehörendes Heißleimauftragssystem (s. Abb. 1) umfasst generell ein Schmelzgerät 100 einen oder mehrere beheizbare Förderschläuche 200 und ein oder mehrere beheizbare Auftragsventile 300.

Das Schmelzgerät 100 umfasst folgende Komponenten:
- einen beheizbaren Tank 110, in dem der Heißleim in festem Aggregatzustand als Granulat oder in Blockform aufgegeben wird. Er dient zur Bevorratung und Verflüssigung des Heißleims. Mittels einer Heizung 111, die eine oder mehrere Heizzonen aufweisen kann, wird der Tank soweit erwärmt, dass sich der Heißleim verflüssigt. Zur Einhaltung der Betriebstemperatur wird, je nach Anzahl der Heizzonen, über einen oder mehrere Temperatursensoren 112 die Isttemperatur für die Regelung erfasst.
- eine Pumpe 120, die den aufgeschmolzenen Heißleim zu den angeschlossenen Verbrauchern fördert.
- ein Überdruckventil 130, das bei Überschreitung des Betriebsdrucks die Verbraucherseite entlastet und Heißleim in den Tank 110 zurückleitet.
- einen Filter 140, der verhindert, dass Partikel mit einer Größe, die zur Verstopfung der Auftragsventile führen könnten, zur Verbraucherseite gelangen.
- einen Verteiler 150, der über mehrere Hydraulikanschlüsse verfügt, an die beheizbare Förderschläuche zur Versorgung mit Heißleim angeschlossen werden können.
- eine elektronische Steuerung 170, mit einer Mehrzonen-Temperaturregelung und -überwachung 171 und einem Bedien- und Anzeigegerät 172. Die Mehrzonen-Temperaturregelung und -überwachung sorgt für die Erreichung und Einhaltung der Solltemperatur der Tankheizzonen und über mehrere externe Anschlüsse für die Erreichung und Einhaltung der Solltemperatur für die angeschlossenen beheizbaren Förderschläuche und beheizbaren Auftragsventile sowie für deren Überwachung.

Die beheizbaren Förderschläuche 200 dienen zur Versorgung der Auftragsventile 300 mit flüssigem Heißleim. Sie werden über eine Heizung 210 erwärmt, um den vom Schmelzgerät 100 zugeführten Heißleim in flüssigem Zustand zu halten. Zur Einhaltung der Betriebstemperatur wird mit dem Temperatursensor 112 die Isttemperatur erfasst und für die Regelung an die Steuerung 170 gemeldet.

Die beheizbaren Auftragsventile 300 sorgen über ein elektrisch oder elektropneumatisch betätigtes Verschlussorgan und eine Düse für die Dosierung und Positionierung einer auf das zu verklebende Produkt aufzubringenden Heißleimportion 20. Sie werden über eine Heizung 310 erwärmt, um den vom Schmelzgerät 100 über die beheizbaren Förderschläuche 200 zugeführten Heißleim so weit zu verflüssigen, dass er abhängig von der Anwendung mit der benötigten Viskosität und Temperatur über die Düse aufgetragen werden kann. Zur Einhaltung der Betriebstemperatur wird mit dem Temperatursensor 320 die Isttemperatur erfasst und für die Regelung an die Steuerung 170 gemeldet.

Je nach Anwendung kann an das Schmelzgerät 100 eine variable Anzahl von beheizbaren Förderschläuchen 200 und beheizbaren Auftragsventilen mit variabler Heizleistung und Regelverhalten angeschlossen werden. Die Konfiguration des Heißleimauftragssystems kann auch nach der Erstinstallation häufiger wechseln, wenn abweichende Produkte verklebt werden, der Heißleim verändert wird oder nach Ausfall einer der Komponenten eine Ersatzkomponente angeschlossen wird, deren Eigenschaften verschieden von der ausgefallenen Komponente ist.

Die Aufheizzeit des Heißleimauftragssystems und die Regelabweichung der Betriebstemperatur vom eingestellten Sollwert der einzelnen Heizkreise sind wichtige Anwendungsparameter, die Produktivität und Betriebssicherheit derartiger Systeme unmittelbar beeinflussen. Zur Optimierung des Regelverhaltens ist es erforderlich, dass die Mehrzonen-Temperaturregelung und -überwachung 171 über die Regelparameter, wie Totzeit und Verstärkungsfaktor, sowie weitere technische Daten, wie Heizleistung und Maximaltemperaturen, sämtlicher angeschlossener Komponenten verfügt.

Es ist bekannt, die Mehrzonen-Temperaturregelung und -überwachung 171 derart auszugestalten, dass die Regelparameter für die verschiedenen angeschlossenen Komponenten manuell eingegeben werden können.

Die manuelle Eingabe der Regelparameter ist jedoch bei einem häufigen Wechsel der Komponenten, des Heißleimtyps oder der zu verklebenden Produkte aufwendig und fehlerträchtig.

Stand der Technik sind Selbstoptimierungsalgorythmen bei digitalen Reglern, die entweder manuell, zyklisch oder bei der Initialisierung der Steuerung gestartet werden und über Testprozeduren die Regelparameter automatisch erfassen. Diese Algorythmen sind aber nur dann erfolgreich, wenn bei Anschluss eines Heizkreises die Abweichung der Regelparameter von den aktuellen Werten automatisch erkannt wird oder bei einem Neuanschluss jeweils manuell ein Optimierungszyklus ausgelöst wird. Die Grenzwerte für die Heizleistung und die Betriebstemperatur können mit diesem Verfahren nicht ermittelt werden. Dies ist insbesondere dann kritisch, wenn während des Betriebs ein Defekt am Heizkreis eintritt oder eine defekte Komponente angeschlossen wird, da die Steuerung dann ohne Alarmauslösung das Regelverhalten an die neu ermittelten Parameter anpasst. Dies kann sich negativ auf die Qualität des Heißleimauftrags auswirken und bei Überschreitung der Maximaltemperaturen zu schwerwiegenden Sicherheitsrisiken führen. Weiterhin bieten die Algorythmen ohne die Kenntnis weiterer technischer Daten zu den angeschlossenen Komponenten keine Möglichkeit, das Verhalten des Heißleimauftragssystems im Ganzen, wie den Energieverbrauch oder die Gesamtaufheizzeit zu optimieren.

Bei bekannten Heißleimauftragssystemen arbeitet die elektronische Steuerung 170 daher entweder mit fest eingestellten mittleren Regelparametern und den Maximalwerten für die Heizleistung und Betriebstemperatur oder einer manuell auszulösenden Selbstoptimierung.

Bei bekannten Heißleimauftragssystemen findet ferner lediglich eine Überwachung der Temperaturfühler auf Kurzschluss und Fühlerbruch statt, da in der Regel jeweils nur ein Typ eingesetzt wird, dessen Daten fest in der Steuerung hinterlegt sind. Eine Überwachung der Heizungen findet nicht statt, da die manuelle Eingabe der Heizungsparameter zu aufwendig ist und der zusätzliche Einbau von Sensoren, wie zum Beispiel Stromfühler, den Kostenrahmen sprengt. Problematisch ist dies, wenn als Ersatz beispielsweise einer defekten Heizung eine solche mit anderer Charakteristik eingesetzt wird.

Ein weiteres Problem besteht darin, dass die eingesetzten Komponenten allesamt nur eine begrenzte Lebensdauer aufweisen und der Ausfall nur einer Komponente zum Ausfall des gesamten Heißleimauftragssystems führen kann.

Eine bekannte Methode zur Erhöhung der Verfügbarkeit einer automatisierten Produktionsanlage besteht in der präventiven Wartung der Komponenten einer solchen Anlage. Dabei wird ausgehend von der zu erwartenden störungsfreien Betriebsdauer, die mit statistischen Auswertungen oder über praktische Untersuchungen gewonnen wird, eine vorbeugende Reparatur oder der vorbeugende Austausch von Komponenten vorgenommen. Eine Voraussetzung zur Organisation der präventiven Wartung besteht in der Aufzeichnung und Verfügbarkeit der aktuellen Betriebsdauer der einzelnen Komponenten. Dazu müssen in einem Logbuch alle Ereignisse, die bewirken, dass die Betriebsdauer der Einzelkomponenten von der Betriebsdauer der Gesamtanlage abweicht, aufwendig und fehlerträchtig per manueller Eingabe dokumentiert werden. Bei bekannten Heißleimauftragssystemen wird deshalb nur die Betriebsdauer des Schmelzgerätes 100 überwacht. Eine automatische Überwachung der Betriebsdauer der angeschlossenen Komponenten findet nicht statt.

Zudem erfolgt bei bekannten Heißleimauftragssystemen keine Aufzeichnung der Überschreitung von Grenzparametern in den Komponenten. Damit stehen diese Informationen für die Diagnose nicht zur Verfügung.

Der Erfindung liegt daher die Aufgabe zugrunde ein Verfahren und eine Vorrichtung zum Auftrag von Heißleim zu schaffen, die auch nach einem Austausch von Komponenten eine sichere Beleimung der zu verklebenden Produkte gewährleistet und deren Betriebssicherheit erhöht ist.

Diese Aufgabe wird durch das beanspruchte Heißleimauftragssystem bzw. durch das beanspruchte Verfahren gelöst. Vorteilhafte Ausgestaltungen des Verfahrens bzw. der Vorrichtung sind Gegenstand der Unteransprüche.

Dadurch, dass bei dem erfindungsgemäßen Heißleimauftragssystem, das ein Schmelzgerät und daran angeschlossene Komponenten, wie einen oder mehreren beheizbare Förderschläuche sowie ein oder mehrere beheizbare Auftragsventile umfasst, die Komponenten einen maschinenlesbaren und vorzugsweise auch maschinenbeschreibbaren Datenträger enthalten, können die zur selbsttätigen Anpassung der Regelparameter durch die Mehrzonen-Temperaturregelung und -überwachung erforderlichen technischen Daten in den Komponenten selbst gespeichert werden. Aufgrund dieser Maßnahme wird erreicht, dass nach einem Austausch einer oder mehrerer Komponenten eine selbsttätige Anpassung der Regelparameter durch die Mehrzonen-Temperaturregelung und - überwachung erfolgt, so dass sämtliche Komponenten des Heißleimauftragssystems stets unter der optimalen Temperatur betrieben werden. Die erfindungsgemäße Weiterbildung des Heißleimauftragssystems ist insbesondere auch zur Betriebsüberwachung der an die Temperaturregelung und -überwachung angeschlossenen Heizkreise geeignet, weil es hierzu erforderlich ist, dass die Steuerung 170 über die Regelparameter sowie weitere technische Daten sämtlicher angeschlossener Komponenten verfügt, da nur so ohne zusätzliche Sensorik Rückschlüsse auf die Funktionsfähigkeit der Komponenten gezogen werden können. So können auch unterschiedliche Typen an Temperatursensoren auf Kurzschluss und Fühlerbruch überwacht werden sowie deren Kalibrierung automatisch eingestellt werden oder über die Auswertung des Temperaturgradienten bei Vollaussteuerung des Heizkreises partielle Kurzschlüsse der Heizwendel oder Heizpatronen oder Installationen der Auftragsventile mit überhöhter Wärmeableitung erkannt werden, wenn die Normwerte in der Steuerung hinterlegt sind.

Zur Bewertung des Wartungszustands und zur Diagnose einer Heißleimanlage ist es erforderlich, dass die Steuerung 170 über Informationen zur Betriebsdauer und zur Überschreitung von Grenzparametern des Schmelzgeräts 100 und der angeschlossenen beheizbaren Förderschläuche 200 und der beheizbaren Auftragsventile 300 verfügt. Dabei ist es von Vorteil, wenn diese Informationen in den Schläuchen und Auftragsventilen selbst hinterlegt werden, damit nach einer Reparatur und beim Anschluss von Komponenten, die schon im Einsatz waren, die bisher erreichte Betriebsdauer und die Überschreitung von festgelegten Grenzparametern automatisch an die Steuerung 170 gemeldet wird. Während des Betriebes kommuniziert die Steuerung bei der Initialisierung und/oder zyklisch sowie bei Veränderung der Systemkonfiguration drahtgebunden oder drahtlos mit den Datenträgern in den angeschlossenen Komponenten und die Steuerung aktualisiert zyklisch die in den Komponenten enthaltenen Betriebsstundenzähler und die Datenspeicher für die Grenzparameter. Die Betriebsdauer und die erreichten Grenzparameter der Komponenten können damit entweder über die Steuerung 170 abgefragt werden, wenn die Komponenten an das Schmelzgerät 100 angeschlossen sind, oder nach der Trennung vom Schmelzgerät 100 auch extern, wenn die Kompo-nente zum Beispiels einer Reparatur unterzogen wird. Hierzu ist der Datenträger vorzugsweise auch maschinenbeschreibbar.

Zur Überwachung der Heißleimanlage ist es von Vorteil, wenn die Steuerung 170 mit der übergeordneten Steuerung der Produktionsanlage oder einer externen Überwachungs- und Diagnoseeinrichtung Daten austauschen kann, damit die Informationen, die von den Datenträgern in den Komponenten gewonnen werden, weiteren Instanzen zur Verfügung stehen. Dazu verfügt die Einrichtung zur Kommunikation über einen Anschluss für verschiedene Feldbussysteme oder das Internet. So kann beim Ausfall einer Komponente, zum Beispiel eine Ferndiagnose per Internet, organisiert werden.

Bekannte Heißleimauftragssysteme verfügen über Einrichtungen, um per Feldbus Daten mit anderen Steuerungen auszutauschen. Allerdings ist der Informationsgehalt sehr beschränkt, da die Daten der angeschlossenen Komponenten nicht zur Verfügung stehen.

In der Zeichnung ist - schematisch - eine bevorzugte Ausführungsform eines erfindungsgemäßen Heißleimauftragssystems dargestellt.

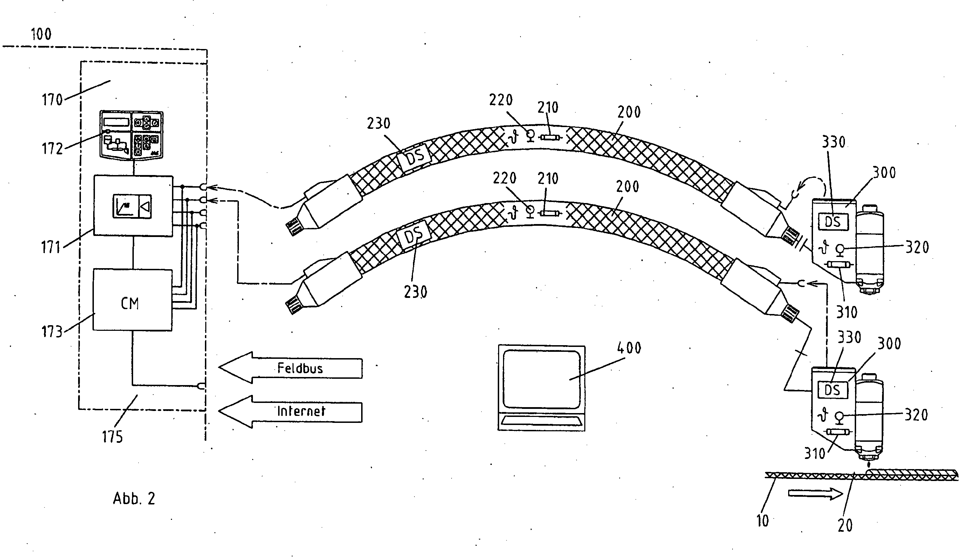

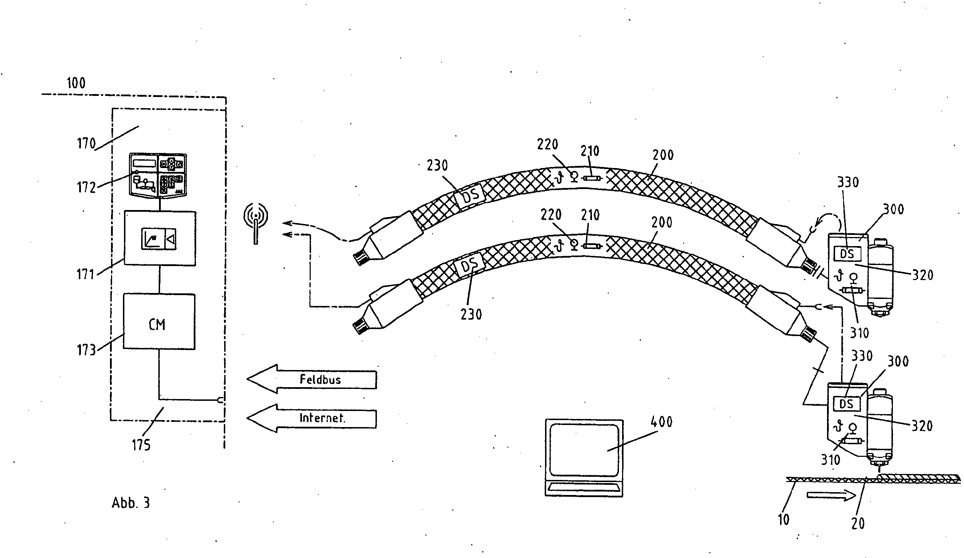

Die Steuerung 170 enthält neben den üblichen Komponenten zur Regelung und Überwachung der Heizkreise des Schmelzgeräts 100 und der angeschlossenen beheizbaren Förderschläuche 200 sowie der angeschlossenen beheizbaren Auftragsventile 300 eine drahtgebundene Vorrichtung 173 (s. Abb. 2) oder eine drahtlose Vorrichtung 174 (s. Abb. 3) zur Kommunikation mit Datenträgern in den angeschlossenen Komponenten. Die Förderschläuche 200 enthalten je einen oder mehrere maschinenlesbare und vorzugsweise auch beschreibbare Datenträger 230 und die Auftragsventile 300 enthalten je einen oder mehrere maschinenlesbare und vorzugsweise auch beschreibbare Datenträger 330, wie zum Beispiel Mikroprozessorsysteme, Speichereinrichtungen, Kodierungen oder RFID, die drahtgebunden oder drahtlos, optisch, per Funk oder mittels anderer geeigneter Verfahren, Daten an die Vorrichtung 173 bzw. die Vorrichtung 174 übermitteln und vorzugsweise auch von dieser empfangen können. Diese Datenträger werden bei der Produktion oder Reparatur der Komponenten mittels einer externen Schreib- und Leseeinheit 400 mit den typspezifischen Regelparametern, wie Totzeit und Verstärkungsfaktor, sowie weiteren technischen Daten, wie Herstellungsdatum, mittlere Lebensdauer, Heizleistung und Maximaltemperaturen, beschrieben. Sind die Komponenten an das Schmelzgerät 100 angeschlossen, übermitteln die Datenträger bei der Initialisierung und/oder zyklisch sowie bei Veränderung der Systemkonfiguration ihre Daten an die Vorrichtung 173 bzw. die Vorrichtung 174. Diese werden dann von der Steuerung 170 genutzt, um eine optimale Regelung und Überwachung der angeschlossenen Komponenten und des Gesamtsystems zu organisieren. Die Vorrichtung 173 bzw. die Vorrichtung 174 übermitteln ihrerseits bei der Initialisierung und/oder zyklisch sowie bei Veränderung der Systemkonfiguration Daten, wie maximale Soll- und Istparameter oder aufgelaufene Betriebsstunden, zur Speicherung an die Datenträger der angeschlossenen Komponenten, die dann vorteilhaft für die Diagnose und präventive Wartung genutzt werden können.

Weiterhin verfügt die Vorrichtung zur Kommunikation 173 bzw. 174 über einen Anschluss 175 zum Datenaustausch per Feldbus mit übergeordneten Steuerungen oder per Internet mit externen Überwachungseinrichtungen. So kann beim Ausfall einer Komponente, zum Beispiel ein Alarmsignal an den Leitstand der Maschine oder eine Ferndiagnose per Internet, organisiert werden.

## Patentansprüche

1. Heißleimauftragssystem mit einem Schmelzgerät (100) und daran angeschlossenen Komponenten, wie einem oder mehreren, beheizbaren Förderschläuchen (200) sowie einem oder mehreren beheizbaren Auftragsventilen (300),
**dadurch gekennzeichnet,**
**dass** die Komponenten einen maschinenlesbaren und vorzugsweise auch maschinenbeschreibbaren Datenträger (230, 330) zum Speichern der zur selbsttätigen Anpassung von Regelparametern durch eine Mehrzonen-Temperaturregelung und -überwachung erforderlichen technischen Daten enthalten.

2. Heißleimauftragssystem nach Anspruch 1, bei dem die maschinenlesbaren und/oder maschinenbeschreibbaren Datenträger (230, 330) ein Mikroprozessorsystem umfassen.

3. Heißleimauftragssystem nach Anspruch 1, bei dem die maschinenlesbaren und/oder maschinenbeschreibbaren Datenträger (230, 330) einen oder mehrere Halbleiterspeicher umfassen.

4. Heißleimauftragssystem nach Anspruch 1, bei dem die maschinenlesbaren und/oder maschinenbeschreibbaren Datenträger (230, 330) einen magnetisch lesbaren und/oder beschreibbaren Speicher oder Kodierungsträger umfassen.

5. Heißleimauftragssystem nach Anspruch 1, bei dem die maschinenlesbaren und/oder maschinenbeschreibbaren Datenträger (230, 330) einen optisch lesbaren und/oder beschreibbaren Speicher oder Kodierungsträger, mit zum Beispiel einem Strich-, 2D- oder 3D-Kod, umfassen.

6. Heißleimauftragssystem nach Anspruch 1, bei dem die für die Regelung und Überwachung der Heizkreise des Schmelzgeräts (100) und der angeschlossenen Komponenten dienende Steuerung (170) über eine Einrichtung zur Kommunikation (173, 174) mit den Datenträgern (230, 330) in den Komponenten verfügt.

7. Heißleimauftragssystem nach Anspruch 6, bei dem die Kommunikation zwischen der Kommunikationseinrichtung (173, 174) der Steuerung (170) und den Datenträgern (230, 330) in den angeschlossenen Komponenten drahtgebunden über die Anschlussstecker des Schmelzgeräts (100) oder drahtlos auf elektromagnetischem, magnetischem, akustischem oder optischem Wege erfolgt.

8. Heißleimauftragssystem nach Anspruch 6 oder 7, bei dem die Einrichtung zur Kommunikation (173, 174) über einen Anschluss verfügt, der per Feldbus mit übergeordneten Steuerungen oder per Internet mit externen Überwachungseinrichtungen Daten austauschen kann.

9. Verfahren zur Regelung und Überwachung eines Heißleimauftragssystems mit einem Schmelzgerät (100), das eine Steuerung (170) enthält, und daran angeschlossenen Komponenten, wie einen oder mehreren beheizbaren Förderschläuchen und einem oder mehreren beheizbaren Auftragsventilen (300),
**dadurch gekennzeichnet,**
**dass** die Steuerung (170) bei der Initialisierung und/oder zyklisch sowie bei Veränderung der Systemkonfiguration drahtgebunden oder drahtlos mit den Datenträgern (230, 330) in den angeschlossenen Komponenten, die jeweils einen maschinenlesbaren und maschinenbeschreibbaren Datenträger (230, 330) mit zur selbsttätigen Anpassung von Regelparametern durch eine Mehrzonen-Temperaturregelung und -überwachung erforderlichen technischen Daten enthalten, kommuniziert.

10. Verfahren nach Anspruch 9, bei dem die Steuerung (170) Daten von den angeschlossenen Komponenten erhält und diese nutzt, um die Regelung und Überwachung deren Heizkreise zu optimieren.

11. Verfahren nach Anspruch 9 oder 10, bei dem die Steuerung (170) Daten an die Datenträger (230, 330) in den angeschlossenen Komponenten überträgt, die genutzt werden, um deren Diagnose und Wartung zu optimieren.

12. Verfahren nach einem der Ansprüche 9 bis 11, bei dem die Steuerung (170) per Feldbus mit übergeordneten Steuerungen oder per Internet mit externen Überwachungseinrichtungen Daten austauscht, die genutzt werden, um die Überwachung des Heißleimauftragssystems zu optimieren und im Fehlerfall eine Ferndiagnose zu ermöglichen.

## Claims

1. Hot-glue application system having a melting device (100) and components connected with it, such as one or more heatable conveying hoses (200), as well as one or more heatable application valves (300),
**characterized in that**
the components contain a machine-readable data storage device and preferably also a machine-writable data storage device (230, 330) for storing the technical data required for automatic adaptation of control parameters by means of multizone temperature regulation and monitoring.

2. Hot-glue application system according to claim 1, in which the machine-readable and/or machine-writable data storage devices (230, 330) comprise a microprocessor system.

3. Hot-glue application system according to claim 1, in which the machine-readable and/or machine-writable data storage devices (230, 330) comprise one or more semiconductor memories.

4. Hot-glue application system according to claim 1, in which the machine-readable and/or machine-writable data storage devices (230, 330) comprise a magnetically readable and/or writable memory or coding storage device.

5. Hot-glue application system according to claim 1, in which the machine-readable and/or machine-writable data storage devices (230, 330) comprise an optically readable and/or writable memory or coding storage device, having a bar code, 2D code or 3D code, for example.

6. Hot-glue application system according to claim 1, in which the controller (170) responsible for regulation and monitoring of the heating circuits of the melting device (100) and of the connected components has a device for communication (173, 174) with the data storage devices (230, 330) in the components.

7. Hot-glue application system according to claim 6, in which the communication between the communication device (173, 174) of the controller (170) and the data storage devices (230, 330) in the connected components takes place in hard-wired manner, by way of the connection plugs of the melting device (100), or wirelessly, in electromagnetic, magnetic, acoustical or optical manner.

8. Hot-glue application system according to claim 6 or 7, in which the device for communication (173, 174) has a connector that can exchange data with overriding controllers via a field bus, or with external monitoring devices via the Internet.

9. Method for controlling and monitoring a hot-glue application system having a melting device (100), which contains a controller (170) and components connected with it, such as one or more heatable conveying hoses and one or more heatable application valves (300),
**characterized in that**
the controller (170), during initialization and/or cyclically and when the system configuration is changed, communicates in wired or wireless manner with the data storage devices (230, 330) in the connected components, which contain a machine-readable and machine-writable data storage device (230, 330) containing the technical data required for automatic adaptation of control parameters by means of multi-zone temperature regulation and monitoring.

10. Method according to claim 9, in which the controller (170) receives data from the connected components and uses these data to optimize the regulation and monitoring of their heating circuits.

11. Method according to claim 9 or 10, in which the controller (170) transmits data to the data storage devices (230, 330) in the connected components, which data are used to optimize their diagnosis and maintenance.

12. Method according to one of claims 9 to 11, in which the controller (170) exchanges data with overriding controllers via a field bus, or with external monitoring devices via the Internet, which data are used to optimize the monitoring of the hot-glue application system and to allow remote diagnosis in the event of a failure.

## Revendications

1. Système d'application de colle à chaud comportant un appareil de fusion (100) et des composants qui y sont raccordés, tels qu'un ou plusieurs tuyaux de transport (200) aptes à être chauffés, et qu'une ou plusieurs soupapes d'application (300) aptes à être chauffées,
**caractérisé en ce que**
les composants comprennent un support de données lisible par ordinateur et de préférence aussi inscriptible par ordinateur (230, 330), destiné au stockage de données techniques nécessaires pour l'adaptation automatique de paramètres de réglage par une régulation et surveillance de température multizone.

2. Système d'application de colle à chaud selon la revendication 1, dans lequel les supports de données lisibles par ordinateur et/ou inscriptibles par ordinateur (230, 330) comprennent un système de microprocesseur.

3. Système d'application de colle à chaud selon la revendication 1, dans lequel les supports de données lisibles par ordinateur et/ou inscriptibles par ordinateur (230, 330) comprennent une ou plusieurs mémoires à semi-conducteur.

4. Système d'application de colle à chaud selon la revendication 1, dans lequel les supports de données lisibles par ordinateur et/ou inscriptibles par ordinateur (230, 330) comprennent une mémoire ou un support de codage lisible et/ou inscriptible par voie magnétique.

5. Système d'application de colle à chaud selon la revendication 1, dans lequel les supports de données lisibles par ordinateur et/ou inscriptibles par ordinateur (230, 330) comprennent une mémoire ou un support de codage lisible ou inscriptible par voie optique comportant, par exemple un code à barres 2D ou 3D.

6. Système d'application de colle à chaud selon la revendication 1, dans lequel la commande (170) servant à la régulation et à la surveillance des circuits de chauffage de l'appareil de fusion (100) et des composants qui y sont raccordés dispose d'un dispositif pour la communication (173, 174) avec les supports de données (230, 330) contenus dans les composants.

7. Système d'application de colle à chaud selon la revendication 6, dans lequel la communication entre le dispositif de communication (173, 174) de la commande (170) et les supports de données (230, 330) s'effectue dans les composants raccordés par voie filaire par l'intermédiaire des fiches de connexion de l'appareil de fusion (100) ou sans fil par voie électromagnétique, magnétique, acoustique ou optique.

8. Système d'application de colle chaud selon l'une des revendications 6 ou 7, dans lequel le dispositif pour la communication (173, 174) dispose d'une connexion qui peut échanger des données avec des commandes de rang supérieur par un bus de champ ou avec des dispositifs de surveillance externes par Internet.

9. Procédé de régulation et de surveillance d'un système d'application de colle à chaud comportant un appareil de fusion (100), qui comprend une commande (170) et des composants qui y sont raccordés, tels qu'un ou plusieurs tuyaux de transport aptes à être chauffés et une ou plusieurs soupapes d'application aptes à être chauffées (300),
**caractérisé en ce que**
la commande (170), lors de l'initialisation et/ou de façon cyclique, ainsi que lors d'une modification de la configuration du système, communique par voie filaire ou sans fil avec les supports de données (230, 330) contenus dans les composants qui y sont raccordés, qui comprennent chacun un support de données lisible par ordinateur et inscriptible par ordinateur (230, 330) qui contient des données techniques nécessaires pour l'adaptation automatique de paramètres de régulation par une régulation et surveillance de température multizone.

10. Procédé selon la revendication 9, dans lequel la commande (170) reçoit des données des composants qui y sont raccordés et les utilise pour optimiser la régulation et la surveillance de leurs circuits de chauffage.

11. Procédé selon l'une des revendications 9 ou 10, dans lequel la commande (170) transmet aux supports de données (230, 330) contenus dans les composants raccordés des données qui sont utilisées pour optimiser le diagnostic et la maintenance de ces composants.

12. Procédé selon l'une des revendications 9 à 11, dans lequel la commande (170) échange avec des commandes de rang supérieur par bus de champ, ou avec des dispositifs de surveillance externe par Internet, des données qui sont utilisées pour optimiser la surveillance du système de dépôt de colle à chaud et pour permettre un télédiagnostic en cas de défaut.
